# EUROPEAN PATENT SPECIFICATION

(11) **EP 3 059 817 B1**
(45) Date of publication and mention of the grant of the patent: **30.09.2020**
(21) Application number: 15155885.5
(22) Date of filing: 20.02.2015
(51) Int. Cl.: H02G 3/08, H02G 3/12

(54) **Mounting box**
Anbringungskasten
Boîtier de montage

(43) Date of publication of application: 24.08.2016
(73) Proprietor: ABB Schweiz AG, 5400 Baden (CH)
(72) Inventor: Andersson, Johan, 06100 Porvoo (FI); Luomi, Juho, 06100 Porvoo (FI); Tervo, Pekka, 06100 Porvoo (FI)
(74) Representative: Kolster Oy Ab

(56) References cited:
- EP-A1- 1 511 144
- EP-A1- 2 822 120
- WO-A2-2012/042232
- DE-A1-102010 026 553
- JP-A- 2002 223 515
- US-A- 4 098 423

## Description

### FIELD OF THE INVENTION

The present invention relates to a mounting box according to the preamble of claim 1.

### BACKGROUND ART

There are two basic types of mounting boxes.

The first type of mounting box is intended to be mounted in a wall comprising an inner wall and an outer wall at a distance from the inner wall. The mounting box is attached to the outer wall in a situation when the inner wall has not yet been erected. The tubes for the electric wires running in the space between the walls are connected to the mounting box before the inner wall is erected. The inner wall is then erected, whereby an opening is formed in the inner wall for an adjustment collar of the mounting box. The adjustment collar will protrude through the opening in the inner wall so that the planar outer surface of the adjustment collar is flush with the inner surface of the inner wall. Access to the mounting space provided within the mounting box is thus provided through the adjustment collar.

EP 2 822 120 discloses a mounting box of the first type. The mounting box comprises a box case defining a mounting space, an adjustment collar adapted to be attached to an inside periphery of the mounting space, and attachment means for attaching the adjustment collar to the inside periphery of the mounting space. The attachment means comprises at least one fixing member pivotably supported to the adjustment collar for pivoting between a disengaged position and a locking position. The at least one fixing member comprises a contact surface which is adapted to cooperate with a counterpart surface on the inside periphery of the mounting space in the locking position of the fixing member.

EP 1 511 144 discloses a flush-mounted mounting box comprising a bottom, a cylindrical side wall, which rises from the bottom and which defines a housing, and a front opening provided opposite to said bottom. The upper end of the cylindrical wall comprises flange means seating against a wall when the mounting box is pushed through an opening in the wall. A separate ring can be pushed in the axial direction into said housing. The ring is provided with fastening means for at least one equipment support. The ring comprises further mounting means cooperating with complementary assembly means carried by said cylindrical side wall for fixing the mounting box to the wall.

US 4,098,423 discloses a multi-purpose electrical outlet box adapted for use with wall switches, plug outlet receptacles, and light fixtures. The box includes a mounting bracket for attaching the assembly to a frame member of the building and a wiring box slidable within the mounting bracket. The position of the wiring box within the mounting bracket can be adjusted so that the wiring box becomes flush with the wall board subsequent to the installation of the wiring box.

JP 2002-223515 discloses a wiring box comprising a bottom part and a top part. Insertion sections are formed to the side walls of the bottom part into a notched shape which is open at the upper end of the side wall. The wiring cover pipe can be pushed from the upper open edge downwards into insertion sections in the bottom part. The connector and nut member used earlier to connect the wiring cover pipe to the bottom part is no longer needed.

DE 10 2010 026 553 discloses a cable outlet e.g. for a furniture. The cable outlet comprises an incorporation unit in which an installation orifice of an incorporation plane is installed. An extensible tube is formed from the incorporation unit and positioned in preferential operational positions. The extensible tube is sliding supported at a flange of a socket. The extensible tube is adjustable in height, and a groove is formed as a rising spiral helix or as a bayonet nut at the socket. The groove is formed with constriction, projection or corresponding recordings.

The second type of mounting box is also intended to be mounted in a wall comprising an inner wall and an outer wall at a distance from the first wall. This second type of mounting box is, however, mounted to the wall at the stage when also the inner wall has been erected. An opening is formed to the inner wall and the second type of mounting box is mounted into the wall by pushing the mounting box through the opening in the inner wall so that the flange means of the mounting box seat against the inner wall. The mounting box will thus be positioned completely inside the inner wall in the space between the inner wall and the outer wall except for the flange portion of the mounting box, which is seated against the first wall. Cables or flexible tubes with electrical wires are connected to the mounting box before the mounting box is pushed into the opening in the wall.

A mounting box, or an installation box, of the second type comprises a casing having a tubular body with a first end and an opposite second end. The second end is closed with a bottom and the first end is open providing access to the interior of the mounting box. There are radially outwardly extending flange means at the first end of the casing. A mounting space is formed in the interior of the mounting box. The mounting box is pushed through an opening in the first wall so that the flange means seat against the first wall. The mounting box is then fastened to the first wall by fastening means.

The invention is directed to the second type of mounting boxes.

### BRIEF DESCRIPTION OF THE INVENTION

An object of the present invention is to achieve a mounting box that can be adapted according to the installation conditions.

The mounting box according to the invention is characterized by what is stated in the independent claim 1.

The adjustable axial length of the installation box means that the same mounting box can be used in various installation environments. The space between the outer wall and the inner wall may vary in different installation environments. The axial length of the mounting box can be adjusted when the mounting box is installed so that the mounting box is suitable for the particular situation.

The pre-prepared points providing tube and/or cable lead-ins in the bottom portion of the bottom part of the mounting box will move further away from the first end of the body portion of the top part when the mounting box is in the extended state i.e. has the maximum axial length. This means that there will be more space within the mounting box making it easier to do the mounting work within the mounting box.

### BRIEF DESCRIPTION OF THE DRAWINGS

In the following the invention will be described in greater detail by means of preferred embodiments with reference to the attached drawings, in which:
Figure 1 shows a bottom part for the mounting box according to the invention,
Figure 2 shows a top part for the mounting box according to the invention,
Figure 3 shows the mounting box in an extended state,
Figure 4 shows the mounting in a contracted state,
Figure 5 shows a cross section of the mounting box of figure 3,
Figure 6 shows a cross section of the mounting box according to figure 4,
Figure 7 shows two mounting boxes mounted to a wall,
Figure 8 shows another bottom part for the mounting box according to the invention,
Figure 9 shows another top part for the mounting box according to the invention,
Figure 10 shows a cross section of the mounting box of figure 8,
Figure 11 shows a cross section of the mounting box of figure 9,
Figure 12 shows three mounting boxes mounted to a wall,
Figure 13 shows still another top part for a mounting box according to the invention.

### DETAILED DESCRIPTION OF THE INVENTION

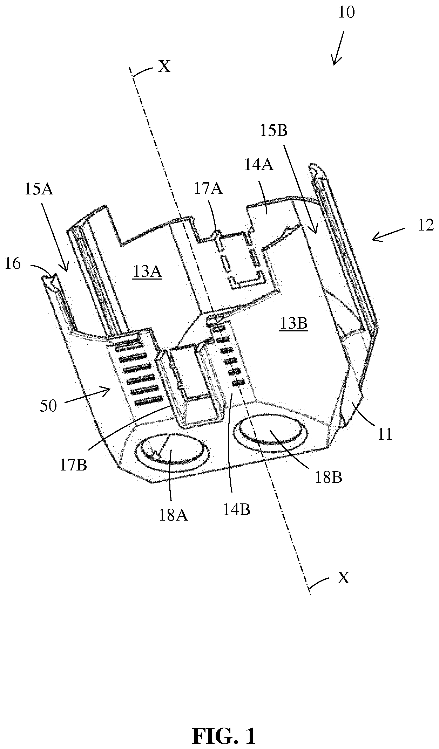

Figure 1 shows a bottom part for the mounting box according to the invention. The bottom part 10 has a longitudinal centre axis X-X and is composed of a bottom portion 11 and a connection portion 12.

The bottom portion 11 of the bottom part 10 forms a closed space within it. The bottom portion 11 comprises at least one pre-prepared point 18A, 18B for a tube and/or cable lead-in. Tubes and/or cables can pass through the shell of the bottom portion 11 through these pre-prepared points 18A, 18B. The pre-prepared points 18A, 18B provide a passage for electric wires positioned in tubes or in cables to pass into an interior of the mounting box 100 from an exterior of the mounting box 100. The pre-prepared points 18A, 18B can be closed with shield covers and opened during installation of the mounting box 100 by punching out the shield covers from the pre-prepared points 18A, 18B. The shield covers can be formed so that the material thickness is reduced on the circumference of the pre-prepared points 18A, 18B or so that the circumference is formed of a slot, whereby small supports cross the slot and keep the shield covers in place in the pre-prepared points 18A, 18B. The pre-prepared points 18A, 18B can on the other hand be formed of crosswise running slots making it possible to push a cable through so that the cable cannot be withdrawn easily from the pre-prepared point 18A, 18B once it has been pushed through. The pre-prepared points 18A, 18B can be positioned on inclined surfaces in the bottom portion 11.

The connection portion 12 of the bottom part 10 extends axially X-X outwards from the bottom portion 11 of the bottom part 10. The connection portion 12 comprises two diametrically opposite first slots 15A, 15B extending axially X-X from the outer edge of the connection portion 12 towards the bottom portion 11. Both axial X-X edges of the first slots 15A, 15B are provided with axial X-X grooves 16. The connection portion 12 comprises two diametrically opposite axially X-X outwardly from a perimeter of the bottom portion 11 extending first connection members 13A, 13B. The perimeter of the two first connection members 13A, 13B is formed of a curved line forming part of the perimeter of a circle. The first slots 15A, 15B are positioned on the middle of the perimeter of the first connection members 13A, 13B. The rectangular first slots 15A, 15B extend axially X-X from the outer edge of the first connection members 13A, 13B inwardly towards the bottom portion 11 of the bottom part 10.

The connection portion 12 of the bottom part 10 comprises further two diametrically opposite axially X-X outwardly from the perimeter of the bottom portion 11 extending second connection members 14A, 14B. The axial X-X edges of each of the second connection members 14A, 14B join the axial X-X edges of two adjacent first connection members 13A, 13B. The perimeter of the two second connection members 14A, 14B is formed by a straight line. The second connection members 14A, 14B are provided with axially X-X extending U-shaped guide members 17A, 17B. A portion of the guide members 17A, 17B protrude radially outwards from the perimeter of the second connection members 14A, 14B.

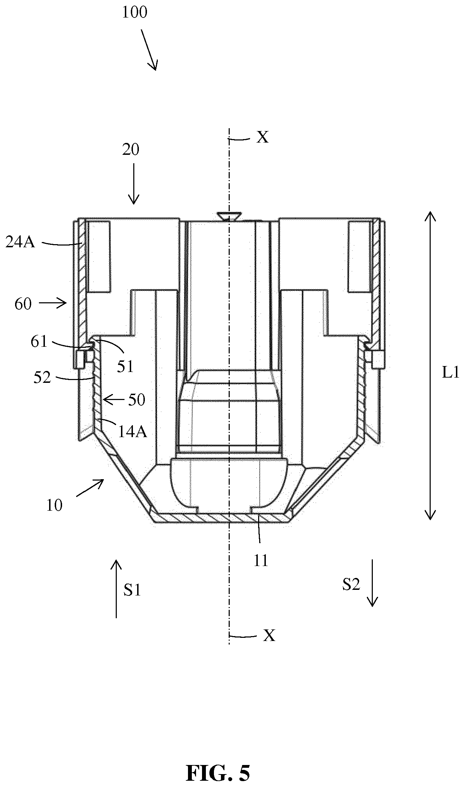

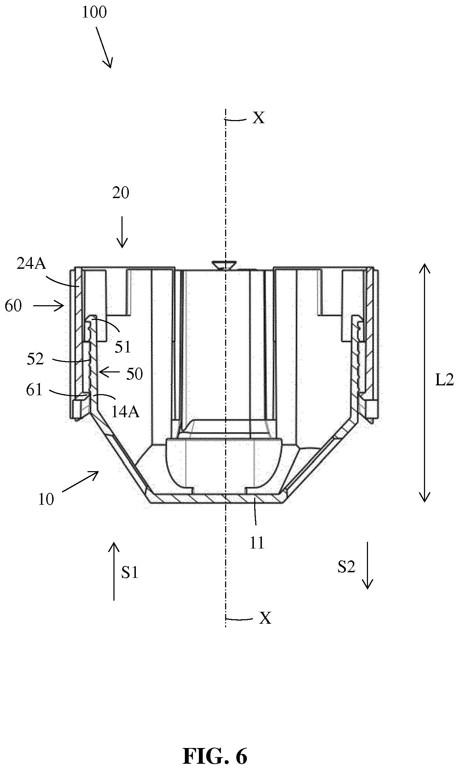

The second connection members 14A, 14B comprises further first connection means 50, which will be described more in detail in connection with figures 5 and 6.

The connection portion 12 of the bottom part 10 has a generally tubular form and can be enclosed by a circle. The perimeter of the connection portion 12 of the bottom part 10 is curved at the first support members 13A, 13B, straight at the second connection members 14A, 14B and has openings at the first slots 15A, 15B.

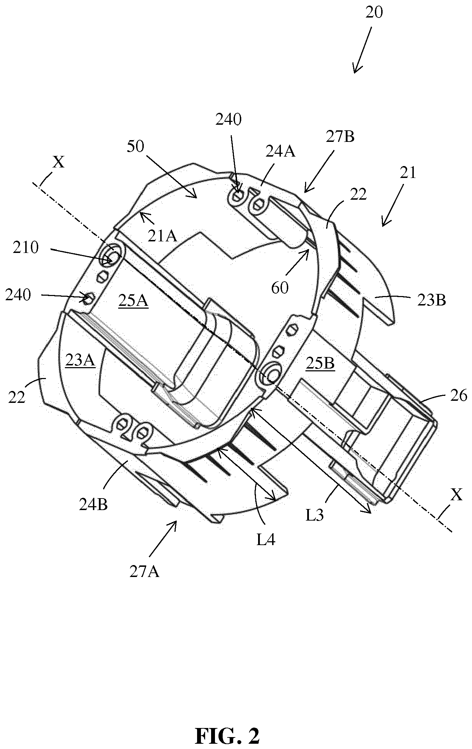

Figure 2 shows a top part for the mounting box according to the invention. The top part 20 has a longitudinal centre axis X-X and is composed of a body portion 21. The tubular body portion 21 has a first end 21A being provided with radially outwardly from the first end 21A of the body portion 21 extending flange means 22. The flange means 22 comprises four radially outwardly extending flange members 22 distributed at an equal angular distance from each other along the perimeter of the body portion 21 of the top part 20. The flange members 22 define a flange plane. The first end 21A of the body portion 21 of the top part 20 forms a planar surface.

The body portion 21 of the top part 20 comprises two diametrically opposite axially X-X outwardly from the body portion 21 extending screw towers 25A, 25B. Both axial X-X edges of each screw tower 25A, 25B are provided with an axial guide protrusion 26. The guide protrusions 26 are received by the corresponding axial X-X grooves 16 in the first slots 15A, 15B in the bottom part 10. The top part 20 comprises two diametrically opposite axially X-X outwardly from the bottom portion 21 extending first support members 23A, 23B. The perimeter of the two first support members 23A, 23B is formed of a curved line forming part of the perimeter of a circle. Each of the two first support members 23A, 23B comprises at its inner perimeter the axially X-X extending generally rectangular screw tower 25A, 25B. The screw towers 25A, 25B are positioned in the centre of the perimeter of the first support members 23A, 23B. An upper end of each of the screw towers 25A, 25B is flush with a flange surface formed by the flange members 22 and comprises an opening 210 for a fastening screw extending to the lower portion of the screw tower 25A, 25B and recesses 240 for fastening screws of the equipment that is to be accommodated in the mounting box 100. Each of the screw towers 25A, 25B has an axial X-X length L3, which is greater than the axial X-X length L4 of the first support members 23A, 23B.

The body portion 21 of the top part 20 comprises further two diametrically opposite axially X-X extending second support members 24A, 24B. The axial X-X edges of each of the second support members 24A, 24B join the axial X-X edges of two adjacent first support members 23A, 23B. The perimeter of the two second support members 24A, 24B is formed by a straight line. There are further additional fastening means in the form of bushings with recesses 240 on the inner perimeter of the second support members 24A, 24B. These form alternative fastening points for the fastening screws of the equipment that is to be accommodated in the mounting box 100. Each of the second support members 24A, 24B comprises second slots 27A, 27B extending axially X-X upwards from the outer edge of the second support member 24A, 24B. The second slots 27A, 27B in the top part 20 receive the guide members 17A, 17B in the bottom part 10.

The second support members 24A, 24B comprises further second connection means 60, which will be described more in detail in connection with figures 5 and 6.

The top part 20 can be enclosed by a circle. The perimeter of the top part 20 has curved portions at the first support members 23A, 23B, straight portions at the second support members 24A, 24B, and straight portions at the screw towers 25A, 25B. The straight portions make it possible to connect several mounting boxes 100 together from any of these straight portions.

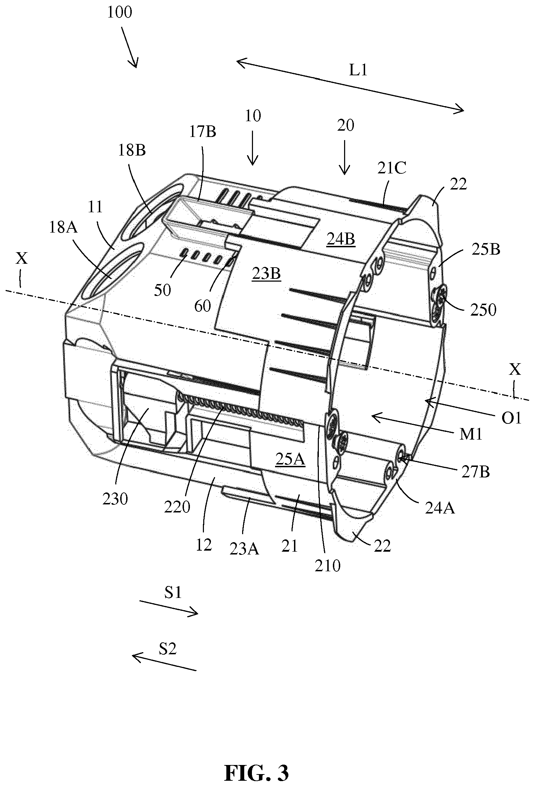

Figure 3 shows the mounting box in an extended state. The bottom part 10 has been pushed at least partly into the top part 20 in a first direction S1 from the bottom of the top part 20. The screw towers 25A, 25B of the top part 20 glide into the first slots 15A, 15B of the bottom part 10 so that the guide protrusions 26 at the edges of the screw towers 25A, 25B glide in the grooves 16 at the edges of the first slots 15A, 15B. The guide members 17A, 17B in the bottom part 10 glide into corresponding second slots 27A, 27B in the top part 20.

The second connection members 14A, 14B of the bottom part 10 comprises first connection means 50 being positioned at both sides of the guide elements 17A, 17B. The second part 20 comprises second opposite connection means 60 being positioned on the second support members 24A, 24B of the top part 20, whereby the first connections means 50 cooperate with the second connection means 60. The bottom part 10 and the top part 20 are connected to each other through the first connection means 50 and the second connection means 60 so that an axial X-X length of the mounting box 100 can be varied between a maximum axial length L1 and a minimum axial length L2 by varying the axial X-X position of the second part 20 in relation to the first part 10.

There are small radial protrusions 21C extending axially X-X along the outer perimeter of the body portion 21 of the top part 20. The radial protrusions 21C grip into the edges of the opening into which the mounting box 100 is pushed eliminating rotation of the mounting box 100 in the opening.

There is an opening O1 passing from the first end 21A of the body portion 21 of the top part 20 into the interior of the mounting box 100. The interior of the mounting box 100 forms a mounting space M1. The mounting space M1 in the interior of the mounting box 100 is intended for accommodating an electrical component such as a wall socket or a light switch.

The figure shows also fastening means 220, 230 cooperating with the flange means 22 in order to fasten the mounting box 100 to a wall. The fastening means 220, 230 comprises a fastening screw 220 and a fastening member 230. The fastening screw 220 passes through the opening 210 in the first end of the screw tower 25A, 25B to the fastening member 230 located in the lower portion of the screw tower 25A, 25B. When the mounting box 100 has been pushed into the hole in the wall the fastening screw 220 is turned clockwise with a screw driver, whereby the fastening member 230 is turned radially outwardly until the side surface of the fastening member 230 seats against the inner side surface of the screw tower 25A, 25B. The fastening member 230 will then start moving in the first direction S1 towards the first end of the crew tower 25A, 25B when the fastening screw 220 is turned further clockwise. The fastening member 230 will then finally seat against the inner surface of the wall and the flange members 22 will seat against the outer surface of the wall when the mounting box is secured to the wall. The figure shows also the screws 250 for the fastening of the electrical component to be accommodated in the mounting box 100.

The pre-prepared points 18A, 18B in the bottom portion 11 of the bottom part 10 are in this extended state furthermost from the first end 21A of the body portion 21 of the top part 20. This means that the mounting space M1 within the mounting box 100 reaches its maximum value in this state.

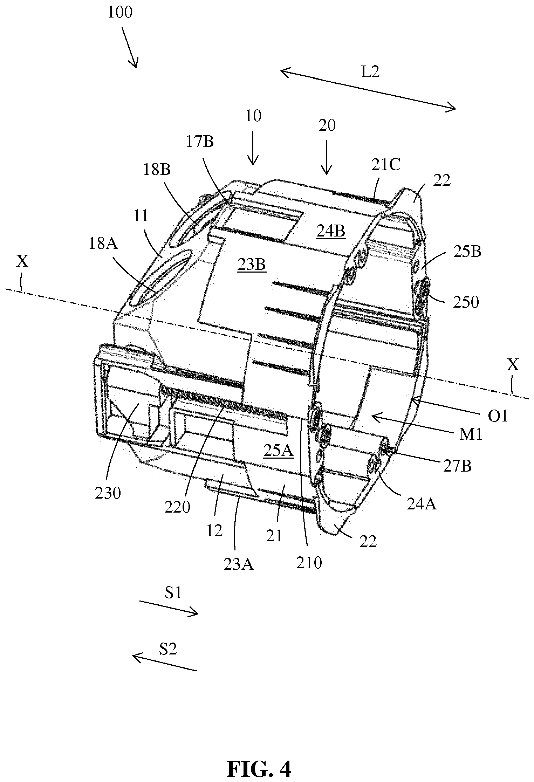

Figure 4 shows the mounting box in a contracted state. The bottom part 10 has been pushed further into the top part 20 in the first direction S1. The axial X-X length L2 of the mounting box 100 is at its minimum value in this figure. The upper end of the guide member 17A, 17B rest against the respective bottom of the second slots 27A, 27B in this contracted position restricting further movement of the bottom part 20 into the top part 10 in the first direction S1.

The pre-prepared points 18A, 18B in the bottom portion 11 of the bottom part 10 are in this contracted state nearest to the first end 21A of the body portion 21 of the top part 20. This means that the mounting space M1 within the mounting box 100 reaches its minimum value in this state.

Figure 5 shows a cross section of the mounting box of figure 3. The axial length L1 of the mounting box is at the maximum value L1 in this figure.

The first connection means 50 on the bottom part 10 comprises axially X-X displaced and radially directed grooves 52. The radially directed grooves 52 are positioned adjacent to each other at an axial X-X distance from each other on the second connection members 14A, 14B on both sides of the guide members 17A, 17B (see figure 1). There is further a first radially outwards directed first notch 51 at an upper axial X-X end of the second connection members 14A, 14B forming a first stop surface in the first connection means 50. There is a radially outwards directed first notch 51 on both sides of the guide members 17A, 17B (see figure 1).

The second connection means 60 on the top part 20 comprises a radially inwards directed second notch 61 at a lower axial X-X end of the second support members 24A, 24B forming a second stop surface in the second connection means 60. There is a radially inwardly directed second notch 61 at both outer sides on the second support member 24A, 24B, whereby the position of the second notches 61 corresponds to the position of the first notches 51.

A snap locking is thus achieved between the bottom part 10 and the top part 20 when the second notch 61 at the lower axial X-X end of the second support members 24A, 24B seats into a respective groove 52 on the first connection means 50 so that the axial X-X length of the mounting box 100 can be varied between a maximum axial X-X length L1 and a minimum axial X-X length L2 by varying the axial X-X position of the bottom part 10 in relation to the top part 20.

The first notch 51 rests against the second notch 42. It requires much more force to slip the first notch 51 over the second notch 61 in order to disengage the bottom part 10 totally from the top part 20 compared to the force required to move the second notch 61 between the different grooves 52 in the first connection means 50. The axial X-X adjustment of the bottom part 10 in relation to the top part 20 can thus be done stepwise between consecutive grooves 52. The axial X-X adjustment of the bottom part 10 can be done simply by hand force without any additional equipment due to the snap locking.

Figure 6 shows a cross section of the mounting box of figure 4. The axial length L2 of the mounting box 100 is at the minimum value L2 in this figure. The upper edges of the guide members 17A, 17B in the second connection members 14A, 14B are seated against the bottom surface of the second slots 27A, 27B in the second support members 24A, 24B.

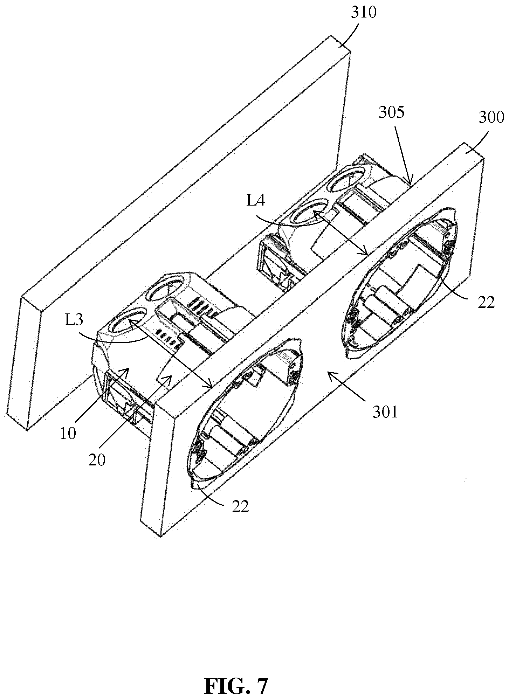

Figure 7 shows two mounting boxes mounted to a wall. The wall comprises a first wall 300 and a second parallel wall 310 at a distance from the first wall 300. The first wall 300 can be an inner wall 300 of a space e.g. a room, whereby the second wall 310 forms the outer wall 310 of the wall construction. The mounting box 100 is adapted to be installed into an opening 305 in the first wall 300 by pushing the mounting box 100 into the opening 305 of the first wall sheet 300 from a first side 301 of the first wall 300. The first side 301 of the first wall 300 is facing towards the interior of the space delimited by the wall structure. The mounting box 100 to the left in the figure is in a state where the axial X-X length L1 of the mounting box 100 is at a maximum. The mounting box 100 to the right in the figure is in a state where the axial X-X length L2 of the mounting box 100 is at a minimum. The thickness of the wall construction can vary so that the distance between the first wall 300 and the second wall 310 varies or so that the thickness of the first wall 300 varies. There is thus a need to be able to adapt the axial X-X length L1, L2 of the mounting box 100 according to this. The distance L3 from the first side 301 of the first wall 300 to the pre-prepared points 18A, 18B for the tubes and/or the cable lead-ins is longer in the mounting box 100 situated to the left in the figure. The distance L4 from the first side 301 of the first wall 300 to the pre-prepared points 18A, 18B for the tubes and/or the cable lead-ins is shorter in the mounting box 100 situated to the right in the figure. The mounting space within the mounting box 100 to the left in the figure is thus greater compared to the mounting space within the mounting box 100 to the right in the figure. This mounting space within the mounting box 100 can be adjusted at any time after the mounting box 100 has been attached to the wall 300 so that the flange means 22 seat against the first side 101 of the first wall 300.

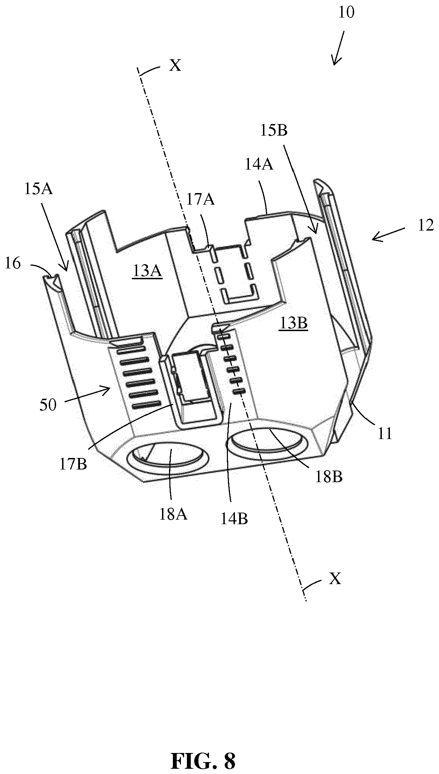

Figure 8 shows another bottom part for the mounting box according to the invention. This bottom part 10 differs from the bottom part 10 shown in figure 1 mainly in that the guide means 17A, 17B do not extend radially outward from the perimeter of the bottom part 10. The bottom part 10 can thus be pushed into the top part 20 from the opening O1 at the first end 21A of the body portion 21 of the top part 20 in a second direction S2 opposite to the first direction S1.

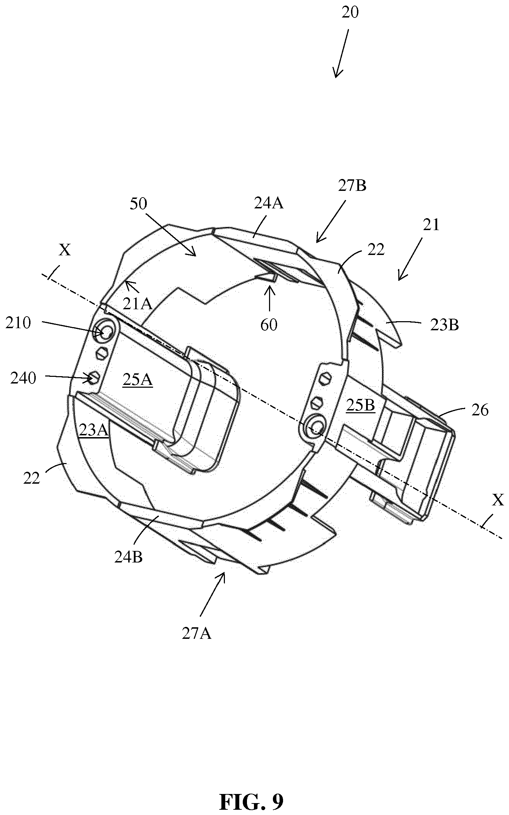

Figure 9 shows another top part for the mounting box according to the invention. This top part 20 differs from the top part 20 shown in figure 2 mainly in that the second support members 24A, 24B do not contain any additional fastening means for the electrical component to be installed into the mounting box 100. The bottom part 10 can thus be pushed into the top part 20 from the opening O1 at the first end 21A of the body portion 21 of the top part 20 in a second direction S2 opposite to the first direction S1.

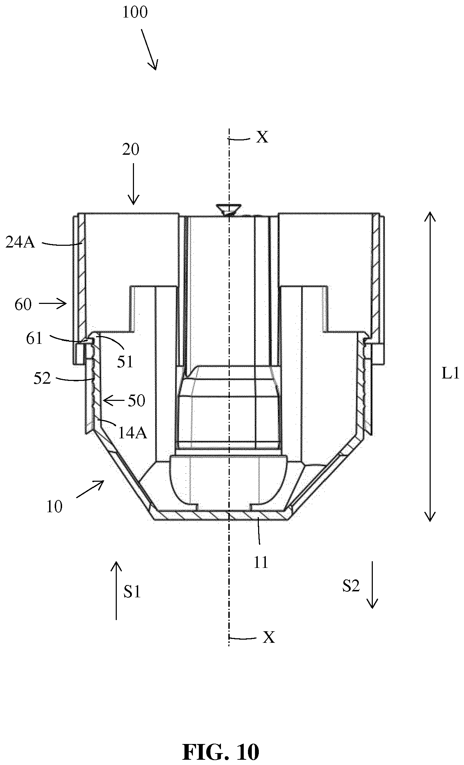

Figure 10 shows a cross section of the mounting box comprising the bottom part of figure 8 and the top part of figure 9 in an extended state. The connection means 50, 60 correspond to the connection means 50, 60 in figures 5 and 6.

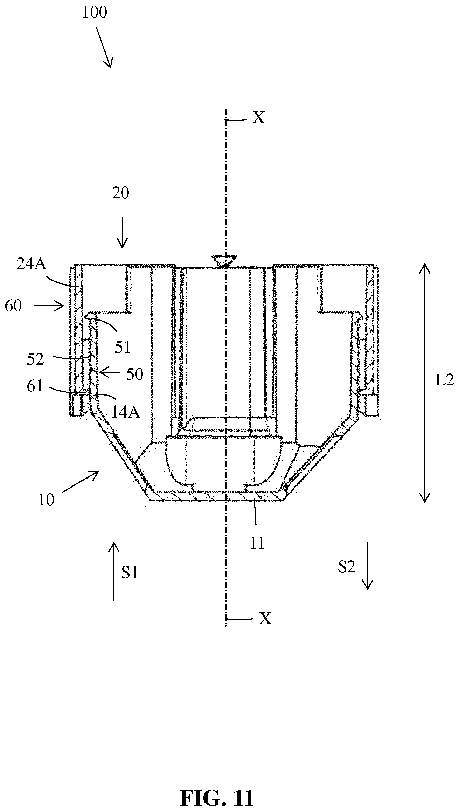

Figure 11 shows a cross section of the mounting box comprising the bottom part of figure 8 and the top part of figure 9 in a contracted state. The connection means 50, 60 correspond to the connection means 50, 60 in figures 5 and 6.

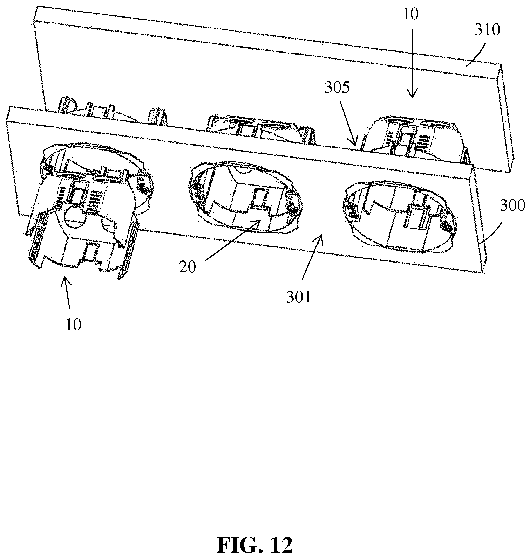

Figure 12 shows three mounting boxes mounted to a wall. The bottom part 10 can be inserted into the top part 20 from the opening O1 at the first end 21A of the body portion 21 of the top part 20. The outer perimeter of the bottom part 10 is so formed that it can be pushed through the first part from the opening O1 at the first end 21A of the body portion 21 of the top part 20.

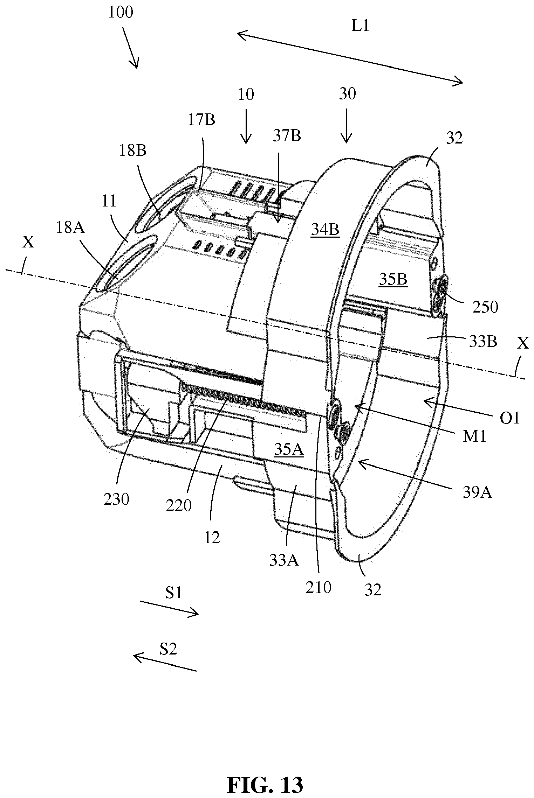

Figure 13 shows still another top part of the mounting box according to the invention. Each of the second support members 34A, 34B in this top part 30 comprises an extended portion 39A, 39B. The extended portions 30A, 39B extend the body portion 31 radially outwardly beyond the second support members 34A, 34B. Each of the extension portions 39A, 39B of the top part 30 form an extension mounting space extending the mounting space M1 that will be formed by the mounting box 100. The opening in the wall has to be adapted accordingly so that the top part 30 fits into the opening. This extended space within the top part 30 is needed so that a 2-gang socket outlet can be fitted into the top part 30 without raising the collar of the cover plate of the 2-gang socket outlet from the surface of the wall. A bottom part 10 according to figure 1 or 8 can be used also in connection with this top part 30. The lower portion of the top part 30 can correspond to the lower part of the top parts of figure 2 and 9. The connection means 50, 60 shown in figures 5 and 6 can also be used in connection with this top part 30.

The bottom part 10 in figure 1 can be inserted at least partly into the top part 20 in figure 2 in a first direction S1. The first direction S1 is directed axially X-X from the bottom of the mounting box 100 towards the opening O1 leading into the mounting space M1 in the mounting box 100.

The bottom part 10 in figure 8 can be inserted at least partly into the top part 20 in figure 9 in a second opposite direction S2. The second direction S2 is directed axially X-X from the opening O1 leading into the mounting space M1 in the mounting box 100 towards the bottom of the mounting box 100.

The top part 30 shown in figure 13 can be adapted to be used in connection with the bottom part 10 in figure 1 and in connection with the bottom part 10 in figure 8.

The bottom part 10 is advantageously formed as a single integral unit. The top part 20, 30 is also advantageously formed as a separate single integral unit. The bottom part 10 and the top part 20, 30 are advantageously made of plastic. The bottom part 10 and the top part 20, 30 can have a different colour, which makes it easier to distinguish the parts.

The outer perimeter of the body portion 21, 31 of the top part 20, 30 could also be elliptic or polygonal which means that the bottom part 10 must be elliptic or polygonal in a corresponding way. Also the opening into which the mounting box 100 is to be installed must have a cross section corresponding to the cross section of the mounting box 100. The longitudinal center axis X-X passes through a middle point at the first end 21A, 31A of the body portion 21, 31 of the top part 20, 30. The longitudinal center axis X-X is perpendicular to the flange plane defined by the flange members 22.

Connection means 50, 60 e.g. based on adjusting screws that adjust the axial position of the bottom part 10 within the top part 20, 30 could naturally be used instead of the connection means 50, 60 disclosed in the figures.

The bottom part 10 can naturally be provided with pre-prepared points 18A, 18B in any position in the bottom portion 11 of the bottom part 10. There could be any number of pre-prepared points 18A, 18B in the bottom portion 11 positioned in any pattern in the bottom portion 11.

The mounting box is an electrical mounting box that can be used as a distribution box for electrical wires and as a mounting box for an electrical component such as an electric switch, a socket, a TV socket etc.

The invention and its embodiments are not limited to the examples described above but may vary within the scope of the claims.

## Claims

1. A mounting box (100) comprising:
a longitudinal centre axis (X-X),
a bottom part (10) comprising a bottom portion (11) and a connection portion (12), said bottom part (10) forming a bottom of the mounting box (100) and being provided with at least one pre-prepared point (18A, 18B) for a tube and/or cable lead-in,
a separate top part (20, 30) being connectable to the bottom part (10), the top part (20, 30) being formed of a tubular body portion (21, 31) with a first end (21A, 31A),
the bottom part (10) and the top part (20, 30) are connected to each other through first connection means (50) positioned in connection with the bottom part (10) and second connection means (60) positioned in connection with the top part (20, 30),
the first end (21A, 31A) in the tubular body portion (21, 31) in the top part (20, 30) is provided with radially outwardly from the body portion (21, 31) extending flange means (22, 32), and fastening means (220, 230) cooperating with the flange means (22, 32) in order to fasten the mounting box (100) to a wall (300),
the bottom part (10) is adapted to be pushed in the axial (X-X) direction at least partly into the top part (20, 30) so that an opening (O1) is formed through the body portion (21, 31) into a mounting space (M1) formed in the interior of the mounting box (100), **characterized in that**
the first connection means (50) comprises radially directed grooves (52) being positioned axially X-X consecutively on an outer surface of the bottom part (10) and a radially outwardly directed first notch (51) on an outer end of the bottom part (10),
the second connection means (60) comprises a second radially inwardly directed notch (61) on an outer end of the top part (20), whereby a snap locking is achieved between the bottom part (10) and the top part (20) when the second notch (61) of the second connection means (60) seats into a respective groove (52) on the first connection means (50) so that the axial (X-X) position of the bottom part (10) can be varied in relation to the top part (20) in order to vary the axial (X-X) length of the mounting box (100) between a maximum axial length (L1) and a minimum axial length (L2).

2. A mounting box (100) according to claim 1, **characterized in that** the first connection means (50) are formed as an integral part of the bottom part (10).

3. A mounting box (100) according to claim 1 or 2, **characterized in that** the second connection means (60) are formed as an integral part of the top part (20).

4. A mounting box (100) according to any one of claims 1 to 3, **characterized in that** the top part (20, 30) comprises two diametrically opposite, axially (X-X) outwardly from the body portion (21, 31) of the top part (20, 30) extending screw towers (25A, 25B), both axial (X-X) edges of each screw tower (25A, 25B) comprising an axial (X-X) guide protrusion (26).

5. A mounting box (100) according to claim 4, **characterized in that** the connection portion (12) of the bottom part (10) comprises two diametrically opposite first slots (15A, 15B) extending axially (X-X) from the outer edge of the connection portion (12) towards the bottom portion (11), both axial (X-X) edges of each of the first slots (15A, 15B) being provided with an axial (X-X) groove (16) for receiving the axial guide protrusions (26) of the screw towers (25A, 25B) of the top part (20, 30).

6. A mounting box (100) according to claim 5, **characterized in that** the connection portion (12) of the bottom part (10) comprises:
two diametrically opposite axially (X-X) outwardly from a perimeter the bottom portion (11) extending first connection members (13A, 13B) being provided with the first slot (15A, 15B) extending axially (X-X) from the outer edge of the first connection members (13A, 13B) towards the bottom portion (11),
two diametrically opposite axially (X-X) outwardly from the perimeter of the bottom portion (11) extending second connection members (14A, 14B), the axial (X-X) edges of each of the second connection members (14A, 14B) joining the axial (X-X) edges of two adjacent first connection members (13A, 13B), the second connection members (14A, 14B) comprising axially (X-X) extending guide members (17A, 17B) protruding outwards from a perimeter of the second connection members (14A, 14B).

7. A mounting box (100) according to claim 6, **characterized in that** the body portion (21) of the top part (20) comprises:
two diametrically opposite axially (X-X) extending first support members (23A, 23B) being provided with the axially (X-X) extending screw towers (25A, 25B) positioned in the centre of the perimeter of each of the first support members (23A, 23B),
two diametrically opposite axially (X-X) extending second support members (24A, 24B), the axial (X-X) edges of each of the second support members (24A, 24B) joining the axial (X-X) edges of two adjacent first support members (23A, 23B), each of the second support members (24A, 24B) comprising second slots (27A, 27B) for receiving the guide members (17A, 17B) of the bottom part (10).

8. A mounting box (100) according to claim 7, **characterized in that** first end surfaces of the screw towers (25A, 25B) are flush with the plane formed by the flange means (22).

9. A mounting box (100) according to claim 8, **characterized in that** the first end surfaces of the screw towers (25A, 25B) comprises recesses (240) extending axially (X-X) into said screw towers (25A, 25B), whereby an installation plate of the electrical component such as a wall socket or a light switch to be accommodated in the mounting box (100) can be seated on the first end surfaces of the screw towers (25A, 25B) and attached with screws (250) to said first end surfaces.

10. A mounting box (100) according to any one of claims 6 to 9, **characterized in that** the first connection means (50) form an integral part of the second connection members (14A, 14B) of the bottom part (10).

11. A mounting box (100) according to any one of claims 7 to 10, **characterized in that** the second connection means (60) form an integral part of the second support members (24A, 24B) of the top part (20).

12. A mounting box (100) according to any one of claims 7 to 11, **characterized in that** each of the second support members (34A, 34B) in the top part (30) comprises an extended portion (39A, 39B) extending the body portion (31) radially outwardly beyond the second support members (34A, 34B), whereby a 2-gang socket outlet can be fitted into the mounting box (100).

13. A mounting box (100) according to any one of claims 1 to 12, **characterized in that** the distance from the flange means (22, 32) to the at least one pre-prepared point (18A, 18B) for a tube and/or cable lead-in changes the same amount as the axial length of the mounting box (100) changes when the an axial (X-X) position of the bottom part (10) in relation to the top part (20, 30) is changed between the maximum axial length (L1) and the minimum axial length (L2).

## Patentansprüche

1. Anbringungskasten (100), der Folgendes umfasst:
eine längs verlaufende mittlere Achse (X-X),
einen unteren Teil (10), umfassend einen Bodenteil (11) und einen Verbindungsteil (12), wobei der untere Teil (10) einen Boden des Anbringungskastens (100) bildet und mit zumindest einem vorab vorbereiteten Punkt (18A, 18B) für einen Rohr- und/oder Kabeleingang bereitgestellt ist,
einen separaten oberen Teil (20, 30), der mit dem unteren Teil (10) verbindbar ist, wobei der obere Teil (20, 30) aus einem rohrförmigen Körperteil (21, 31) mit einem ersten Ende (21A, 31A) gebildet wird,
wobei der untere Teil (10) und der obere Teil (20, 30) miteinander über erste Verbindungsmittel (50), die in Verbindung mit dem unteren Teil (10) positioniert sind, und zweite Verbindungsmittel (60), die in Verbindung mit dem oberen Teil (20, 30) positioniert sind, verbunden sind,
wobei das erste Ende (21A, 31A) im rohrförmigen Körperteil (21, 31) im oberen Teil (20, 30) mit sich vom Körperteil (21, 31) radial auswärts erstreckenden Flanschmitteln (22, 32) und Befestigungsmitteln (220, 230), die mit den Flanschmitteln (22, 32) zusammenwirken, versehen ist, um den Anbringungskasten (100) an einer Wand (300) zu befestigen,
wobei der untere Teil (10) dazu angepasst ist, in der axialen (X-X) Richtung zumindest teilweise in den oberen Teil (20, 30) gedrückt zu werden, sodass eine Öffnung (O1) durch den Körperteil (21, 31) in einen Anbringungsraum (M1) gebildet wird, der im Inneren des Anbringungskastens (100) gebildet ist, **dadurch gekennzeichnet, dass**
die ersten Verbindungsmittel (50) radial ausgerichtete Nuten (52), die axial X-X aufeinander folgend auf einer äußeren Oberfläche des unteren Teils (10) positioniert sind, und eine radial auswärts gerichtete Raste (51) an einem äußeren Ende des unteren Teils (10) umfassen,
die zweiten Verbindungsmittel (60) eine zweite radial einwärts gerichtete Raste (61) an einem äußeren Ende des oberen Teils (20) umfassen, wobei eine Einrastverriegelung zwischen dem unteren Teil (10) und dem oberen Teil (20) erreicht wird, wenn die zweite Raste (61) der zweiten Verbindungsmittel (60) in einer entsprechenden Nut (52) an den ersten Verbindungsmitteln (50) sitzt, sodass die axiale (X-X) Position des unteren Teils (10) in Beziehung zum oberen Teil (20) variiert werden kann, um die axiale (X-X) Länge des Anbringungskastens (100) zwischen einer maximalen axialen Länge (L1) und einer minimalen axialen Länge (L2) zu variieren.

2. Anbringungskasten (100) nach Anspruch 1, **dadurch gekennzeichnet, dass** die ersten Verbindungsmittel (50) als ein integraler Teil des unteren Teils (10) ausgebildet sind.

3. Anbringungskasten (100) nach Anspruch 1 oder 2, **dadurch gekennzeichnet, dass** die zweiten Verbindungsmittel (60) als ein integraler Teil des oberen Teils (20) ausgebildet sind.

4. Anbringungskasten (100) nach einem der Ansprüche 1 bis 3, **dadurch gekennzeichnet, dass** der obere Teil (20, 30) zwei diametral gegenüberliegende, sich axial (X-X) vom Körperteil (21, 31) des oberen Teils (20, 30) auswärts erstreckende Schraubentürme (25A, 25B) umfasst, wobei beide axiale (X-X) Ränder jedes Schraubenturms (25A, 25B) einen axialen (X-X) Führungsvorsprung (26) umfassen.

5. Anbringungskasten (100) nach Anspruch 4, **dadurch gekennzeichnet, dass** der Verbindungsteil (12) des unteren Teils (10) zwei diametral gegenüberliegende erste Schlitze (15A, 15B) umfasst, die sich axial (X-X) vom äußeren Rand des Verbindungsteils (12) in Richtung des unteren Teils (11) erstrecken, wobei beide axiale (X-X) Ränder von jedem der ersten Schlitze (15A, 15B) mit einer axialen (X-X) Nut (16) zum Aufnehmen der axialen Führungsvorsprünge (26) der Schraubentürme (25A, 25B) des oberen Teils (20, 30) versehen sind.

6. Anbringungskasten (100) nach Anspruch 5, **dadurch gekennzeichnet, dass** der Verbindungsteil (12) des unteren Teils (10) Folgendes umfasst.
zwei diametral gegenüberliegende, sich von einem Umfang des Bodenteils (11) axial (X-X) auswärts erstreckende erste Verbindungselemente (13A, 13B), die mit dem ersten Schlitz (15A, 15B) versehen sind, der sich axial (X-X) vom äußeren Rand der ersten Verbindungselemente (13A, 13B) auswärts in Richtung des Bodenteils (11) erstreckt,
zwei diametral gegenüberliegende, sich vom Umfang des Bodenteils (11) axial (X-X) auswärts erstreckende zweite Verbindungselemente (14A, 14B), wobei sich die axialen (X-X) Ränder von jedem der zweiten Verbindungselemente (14A, 14B) mit den axialen (X-X) Rändern von zwei angrenzenden ersten Verbindungselementen (13A 13B) verbinden, wobei die zweiten Verbindungselemente (14A, 14B) sich axial (X-X) erstreckende Führungselemente (17A, 17B) umfassen, die von einem Umfang der zweiten Verbindungselemente (14A, 14B) auswärts herausragen.

7. Anbringungskasten (100) nach Anspruch 6, **dadurch gekennzeichnet, dass** der Körperteil (21) des oberen Teils (20) Folgendes umfasst.
zwei diametral gegenüberliegende, sich axial (X-X) erstreckende erste Stützelemente (23A, 23B), die mit den sich axial (X-X) erstreckenden Schraubentürmen (25A, 25B) versehen sind, die in der Mitte des Umfangs von jedem der ersten Stützelemente (23A, 23B) positioniert sind,
zwei diametral gegenüberliegende, sich axial (X-X) erstreckende zweite Stützelemente (24A, 24B), wobei sich die axialen (X-X) Ränder von jedem der zweiten Stützelemente (24A, 24B) mit den axialen (X-X) Rändern von zwei angrenzenden ersten Stützelementen (23A 23B) verbinden, wobei jedes der zweiten Stützelemente (24A, 24B) zweite Schlitze (27A, 27B) zum Aufnehmen der Führungselemente (17A, 17B) des unteren Teils (10) umfasst.

8. Anbringungskasten (100) nach Anspruch 7, **dadurch gekennzeichnet, dass** erste Endoberflächen der Schraubentürme (25A, 25B) bündig mit der Ebene sind, die durch die Flanschmittel (22) gebildet wird.

9. Anbringungskasten (100) nach Anspruch 8, **dadurch gekennzeichnet, dass** die ersten Endoberflächen der Schraubentürme (25A, 25B) Vertiefungen (240) umfassen, die sich axial (X-X) in die Schraubentürme (25A, 25B) erstrecken, wobei eine Installationsplatte der elektrischen Komponente, wie etwa einer Wandsteckdose oder eines Lichtschalters, die in dem Anbringungskasten (100) aufgenommen werden sollen, auf die ersten Endoberflächen der Schraubentürme (25A, 25B) gesetzt und mit Schrauben (250) an den ersten Endoberflächen befestigt werden können.

10. Anbringungskasten (100) nach einem der Ansprüche 6 bis 9, **dadurch gekennzeichnet, dass** die ersten Verbindungsmittel (50) einen integralen Teil der zweiten Verbindungselemente (14A, 14B) des unteren Teils (10) bilden.

11. Anbringungskasten (100) nach einem der Ansprüche 7 bis 10, **dadurch gekennzeichnet, dass** die zweiten Verbindungsmittel (60) einen integralen Teil der zweiten Stützelemente (24A, 24B) des oberen Teils (20) bilden.

12. Anbringungskasten (100) nach einem der Ansprüche 7 bis 11, **dadurch gekennzeichnet, dass** jedes der zweiten Stützelemente (34A, 34B) im oberen Teil (30) einen Erweiterungsteil (39A, 39B) umfasst, der den Körperteil (31) radial auswärts über die zweiten Stützelemente (34A, 34B) hinaus erweitert, wodurch eine Doppelsteckdose im Anbringungskasten (100) befestigt werden kann.

13. Anbringungskasten (100) nach einem der Ansprüche 1 bis 12, **dadurch gekennzeichnet, dass** der Abstand von den Flanschmitteln (22, 32) zu dem zumindest einen vorab vorbereiteten Punkt (18A, 18B) für einen Rohr- und/oder Kabeleingang sich um den gleichen Betrag ändert, um den sich die axiale Länge des Anbringungskastens (100) ändert, wenn die axiale (X-X) Position des unteren Teils (10) bezüglich des oberen Teils (20, 30) zwischen der maximalen axialen Länge (L1) und der minimalen axialen Länge (L2) geändert wird.

## Revendications

1. Boîtier de montage (100) comprenant :
un axe central longitudinal (X-X),
une partie inférieure (10) comprenant une section inférieure (11) et une section de connexion (12), ladite partie inférieure (10) formant un dessous du boîtier de montage (100) et étant munie d'au moins un point pré-préparé (18A, 18B) pour un tube et/ou une entrée de câble, et
une partie supérieure (20, 30) séparée pouvant être connectée à la partie inférieure (10), la partie supérieure (20, 30) étant formée d'une section corps tubulaire (21, 31) avec une première extrémité (21A, 31A),
la partie inférieure (10) et la partie supérieure (20, 30) étant connectées l'une à l'autre par un premier moyen de connexion (50) positionné en connexion avec la partie inférieure (10) et par un second moyen de connexion (60) positionné en connexion avec la partie supérieure (20, 30),
la première extrémité (21A, 31A) dans la section corps tubulaire (21, 31) dans la partie supérieure (20, 30) étant munie d'un moyen formant bride (22, 32) s'étendant radialement vers l'extérieur à partir de la section corps (21, 31) et d'un moyen de fixation (220, 230) coopérant avec le moyen formant bride (22, 32) afin de fixer le boîtier de montage (100) à un mur (300), et
la partie inférieure (10) étant conçue pour être poussée dans la direction axiale (X-X), au moins en partie, dans la partie supérieure (20, 30) de sorte qu'une ouverture (O1) soit formée à travers la section corps (21, 31) dans un espace de montage (M1) formé à l'intérieur du boîtier de montage (100),
**caractérisé en ce que** :
le premier moyen de connexion (50) comprend des rainures (52) dirigées radialement qui sont positionnées successivement dans la direction axiale X-X sur une surface extérieure de la partie inférieure (10) et une première encoche (51) dirigée radialement vers l'extérieur sur une extrémité extérieure de la partie inférieure (10), et
le second moyen de connexion (60) comprend une seconde encoche (61) dirigée radialement vers l'intérieur sur une extrémité extérieure de la partie supérieure (20), un verrouillage par encliquetage étant obtenu entre la partie inférieure (10) et la partie supérieure (20) quand la seconde encoche (61) du second moyen de connexion (60) se loge dans une rainure respective (52) du premier moyen de connexion (50) de sorte que la position axiale (X-X) de la partie inférieure (10) puisse être modifiée par rapport à la partie supérieure (20) afin de faire varier la longueur axiale (X-X) du boîtier de montage (100) entre une longueur axiale maximale (L1) et une longueur axiale minimale (L2).

2. Boîtier de montage (100) selon la revendication 1, **caractérisé en ce que** le premier moyen de connexion (50) est formé comme faisant partie intégrante de la partie inférieure (10).

3. Boîtier de montage (100) selon la revendication 1 ou 2, **caractérisé en ce que** le second moyen de connexion (60) est formé comme faisant partie intégrante de la partie supérieure (20).

4. Boîtier de montage (100) selon l'une quelconque des revendications 1 à 3, **caractérisé en ce que** la partie supérieure (20, 30) comprend deux tours de vis (25A, 25B) diamétralement opposées, s'étendant dans la direction axiale (X-X) vers l'extérieur à partir de la section corps (21, 31) de la partie supérieure (20, 30), les deux bords axiaux (X-X) de chaque tour de vis (25A, 25B) comprenant une protubérance de guidage axiale (X-X) (26).

5. Boîtier de montage (100) selon la revendication 4, **caractérisé en ce que** la section de connexion (12) de la partie inférieure (10) comprend deux premières encoches (15A, 15B) diamétralement opposées s'étendant dans la direction radiale (X-X) à partir du bord extérieur de la section de connexion (12) vers la section inférieure (11), les deux bords axiaux (X-X) de chacune des premières encoches (15A, 15B) étant munis d'une rainure axiale (X-X) (16) pour recevoir les protubérances de guidage axiales (26) des tours de vis (25A, 25B) de la partie supérieure (20, 30).

6. Boîtier de montage (100) selon la revendication 5, **caractérisé en ce que** la section de connexion (12) de la partie inférieure (10) comprend :
deux premiers éléments de connexion (13A, 13B) diamétralement opposés s'étendant dans la direction axiale (X-X) vers l'extérieur à partir d'un périmètre de la section inférieure (11), munis de la première encoche (15A, 15B) s'étendant dans la direction axiale (X-X) à partir du bord extérieur des premiers éléments de connexion (13A, 13B) vers la section inférieure (11), et
deux seconds éléments de connexion (14A, 14B) diamétralement opposés s'étendant dans la direction axiale (X-X) vers l'extérieur à partir du périmètre de la section inférieure (11), les bords axiaux (X-X) de chacun des seconds éléments de connexion (14A, 14B) joignant les bords axiaux (X-X) de deux premiers éléments de connexion (13A, 13B) adjacents, les seconds éléments de connexion (14A, 14B) comprenant des éléments de guidage (17A, 17B) s'étendant dans la direction axiale (X-X) et faisant saillie vers l'extérieur à partir d'un périmètre des seconds éléments de connexion (14A, 14B).

7. Boîtier de montage (100) selon la revendication 6, **caractérisé en ce que** la section corps (21) de la partie supérieure (20) comprend :
deux premiers éléments de support (23A, 23B) diamétralement opposés s'étendant dans la direction axiale (X-X), situés avec les tours de vis (25A, 25B) s'étendant dans la direction axiale (X-X) positionnées au centre du périmètre de chacun des premiers éléments de support (23A, 23B), et
deux seconds éléments de support (24A, 24B) diamétralement opposés s'étendant dans la direction axiale (X-X), les bords axiaux (X-X) de chacun des seconds éléments de support (24A, 24B) joignant les bords axiaux (X-X) de deux premiers éléments de support (23A, 23B) adjacents, chacun des seconds éléments de support (24A, 24B) comprenant des secondes encoches (27A, 27B) pour recevoir les éléments de guidage (17A, 17B) de la partie inférieure (10).

8. Boîtier de montage (100) selon la revendication 7, **caractérisé en ce que** des premières surfaces extrêmes des tours de vis (25A, 25B) sont au même niveau que le plan formé par le moyen formant bride (22).

9. Boîtier de montage (100) selon la revendication 8, **caractérisé en ce que** les premières surfaces extrêmes des tours de vis (25A, 25B) comprennent des évidements (240) s'étendant dans la direction axiale (X-X) dans lesdites tours de vis (25A, 25B), une plaque d'installation du composant électrique, comme une prise murale ou un interrupteur d'éclairage, qui est destinée à être reçue dans le boîtier de montage (100), pouvant être logée sur les premières surfaces extrêmes des tours de vis (25A, 25B) et fixée avec des vis (250) auxdites premières surfaces extrêmes.

10. Boîtier de montage (100) selon l'une quelconque des revendications 6 à 9, **caractérisé en ce que** le premier moyen de connexion (50) fait partie intégrante des seconds éléments de connexion (14A, 14B) de la partie inférieure (10).

11. Boîtier de montage (100) selon l'une quelconque des revendications 7 à 10, **caractérisé en ce que** le second moyen de connexion (60) fait partie intégrante des seconds éléments de support (24A, 24B) de la partie supérieure (20).

12. Boîtier de montage (100) selon l'une quelconque des revendications 7 à 11, **caractérisé en ce que** chacun des seconds éléments de support (34A, 34B) dans la partie supérieure (30) comprend une section étendue (39A, 39B) étendant radialement la section corps (31) vers l'extérieur au-delà des seconds éléments de support (34A, 34B), de sorte qu'un socle de prises jumelées puisse être monté dans le boîtier de montage (100).

13. Boîtier de montage (100) selon l'une quelconque des revendications 1 à 12, **caractérisé en ce que** la distance du moyen formant bride (22, 32) à l'au moins un point pré-préparé (18A, 18B) pour un tube et/ou une entrée de câble subisse une variation égale à une variation de la longueur axiale du boîtier de montage (100) quand une position axiale (X-X) de la partie inférieure (10) par rapport à la partie supérieure (20, 30) varie entre la longueur axiale maximale (L1) et la longueur axiale minimale (L2).
